# EUROPEAN PATENT SPECIFICATION

(11) **EP 2 395 269 B1**
(45) Date of publication and mention of the grant of the patent: **11.09.2013**
(21) Application number: 11169656.3
(22) Date of filing: 11.06.2011
(51) Int. Cl.: F16K 15/02, F16K 17/08

(54) **Check valve**
Rückschlagventil
Soupape de retenue

(30) Priority: 11.06.2010 IT TO20100497
(43) Date of publication of application: 14.12.2011
(73) Proprietor: Pres-Block S.P.A., 10040 Caselette (IT)
(72) Inventor: Rossato, Franco, 10091 Alpignano (IT)
(74) Representative: Bergadano, Mirko

(56) References cited:
- CH-A- 82 654
- US-A- 2 650 793
- US-A- 2 727 529
- US-A1- 2005 103 385

## Description

The present invention relates to a check valve, as is, according to the features set out in the preamble of claim 1, known for example from CH-A-82 654.

More specifically, the present invention relates to a check valve designed in particular for use in the hydraulic circuit of a percolating machine for making beverages such as coffee or tea, and, more generally speaking, for use in the hydraulic circuit of systems which alter the characteristics of the operating fluid flowing along the circuit, so that accidental backflow of even a small amount of fluid upstream from the valve is to be avoided at all cost.

Beverage percolating machines normally comprise a hydraulic circuit, along which water flows from a tank and is heated and pressurized for supply to an infusion chamber.

Accordingly, percolating machines normally comprise a pump and a boiler for heating and pressurizing the water, normally to a temperature of 80-100°C and a pressure ranging from 0.2-0.4 to over 8-9 bars at the infusion extraction stage, depending on the type of beverage.

The infusion chamber, which may be defined by a cavity in the percolating machine itself or by a wafer/capsule, contains a bed of a more or less fine, infusible substrate defined, for example, by ground coffee, tealeaves, herbs and/or fruit, etc.; the pressurized hot water flowing through the infusion chamber extracts the beverage by infusion; and the beverage is collected downstream in a cup-shaped vessel.

Known percolating machines operate in a variety of different ways, but normally all provide for bringing the water supply to the infusion chamber to a minimum pressure and/or temperature before commencing the infusion process. For example, infusion capsules are known, which only allow outflow of the infusion when a given pressure is exceeded inside the capsule, so as to ensure optimum diffusion of the water inside the infusible substrate.

Whichever the case, the hydraulic circuit of percolating machines of the type described normally comprises a check valve, which only allows operating fluid (normally pressurized hot water) flow in direction of feeding to the infusion chamber only when a given threshold pressure is exceeded. And, because the characteristics of the operating fluid are altered greatly as it percolates through the infusion chamber, i.e. as it is extracted and substantially converted into the infusion beverage, any backflow, for any reason, of even a small amount of operating fluid upstream of the hydraulic circuit must be avoided at all cost.

Because the infusion substantially comprises an aqueous suspension of particles (e.g. ground coffee particulate, tealeaves or other vegetable matter, etc.), any backflow upstream would result in a gradual accumulation of the particles in the percolated operating fluid, thus resulting in scale, clogging and/or formation of bacteria, which could spread inside the hydraulic circuit.

Also from the beverage quality standpoint (taste, organoleptic properties, etc.), it is imperative that none of the fluid percolated through the infusion chamber be allowed to settle in the hydraulic circuit of the machine, and be fed again through the infusion chamber at the next percolating stage.

This is prevented using a check valve comprising:
- a body defining, on the inside, a cavity communicating with an operating fluid conduit; and
- a plug member housed inside the cavity and movable between a closed position, in which it engages a seat formed at least partly in the operating fluid conduit, to prevent fluid flow upstream and downstream of the valve; and an open position allowing such flow.

The check valve plug member is loaded by elastic means housed inside the cavity and cooperating with the body and plug member to push the plug member into the seat, i.e. into the closed position.

The valve seat, plug member, and elastic means are normally substantially aligned along an axis of the valve body.

The geometry and arrangement of the valve seat, plug member, and operating fluid conduit are such that the force exerted, in use, on the plug member by the fluid upstream from it substantially equals the pressure of the fluid multiplied by the plug member surface area exposed to the fluid. When this force is strong enough to overcome opposition of the elastic means, the plug member is moved axially into the open position, allowing operating fluid flow from upstream to downstream of the valve.

In the circuit section downstream from the valve, however, an overpressure condition frequently occurs, in which the force exerted by the downstream fluid on the plug member, though equal to the downstream pressure multiplied by a small surface area of the plug member, is nevertheless strong enough to overcome opposition of the elastic means.

In which case, fluid may flow back upstream from the valve, carrying suspended particulate to the part of the hydraulic circuit which should be protected from this sort of 'contamination'. In other words, the valve opens at an operating stage of the user device at which it should not.

Moreover, especially at low operating pressures or with low elastic loads on the plug member, even minor interference, caused, for example, by particles in the valve seat area, may prevent the valve from closing properly or firmly enough, thus aiding backflow.

A check valve is therefore needed, designed to provide a simple, low-cost solution to the above drawbacks typically associated with known types, and which opens/closed rapidly and is highly dependable.

More specifically, a check valve is needed, designed to prevent upstream backflow of fluid capable of 'contaminating' the hydraulic circuit section upstream from the valve.

It is an object of the present invention to provide a check valve designed to meet at least one of the above demands in a straightforward, low-cost manner.

According to the present invention, there is provided a check valve as claimed in Claim 1. Preferred embodiments of the invention are defined in the dependent claims.

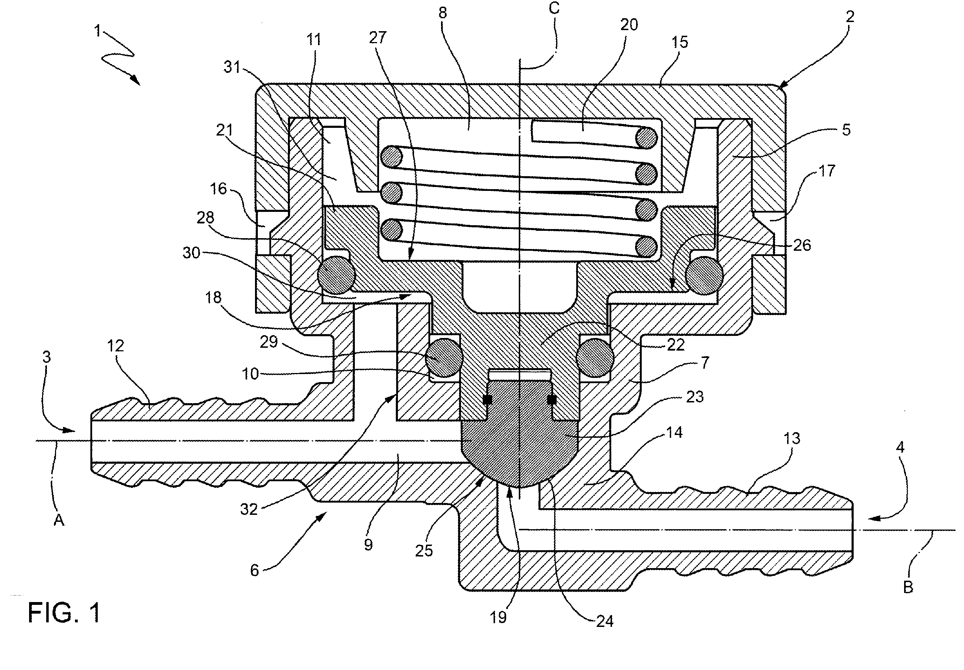

A preferred, non-limiting embodiment of the present invention will be described by way of example with reference to the attached Figure 1 showing a schematic section of a check valve in accordance with the invention.

Number 1 in Figure 1 indicates as a whole a check valve in accordance with the present invention.

Check valve 1 comprises a main body 2, which, in turn, comprises an inlet 3 connectable fluidically to an inlet conduit of a hydraulic circuit along which pressurized fluid flows in use, and an outlet 4 connectable fluidically to an outlet conduit of the hydraulic circuit.

More specifically, main body 2 comprises a cup-shaped portion 5 and a tubular portion 6, between which extends a cylindrical member 7.

Cup-shaped portion 5 and cylindrical member 7 define internally a cavity 8 communicating with a tubular conduit 9 defined in tubular portion 6.

Cavity 8 comprises a first portion 10 in cylindrical member 7 and a second portion 11 in cup-shaped portion 5.

First and second portions 10, 11 are substantially cylindrical. In particular, first portion 10 is smaller in diameter than second portion 11.

In the example shown, tubular portion 6 comprises an inlet portion 12 and an outlet portion 13, which extend along respective axes A and B parallel to each other and crosswise to an axis C of cup-shaped portion 5. Moreover, tubular portion 6 comprises a connecting portion 14 crosswise to and fluidically connecting inlet portion 12 and outlet portion 13. More specifically, inlet portion 12 extends from inlet 3 to connecting portion 14, and outlet portion 13 extends from connecting portion 14 to outlet 4.

Connecting portion 14 is preferably perpendicular to inlet portion 12 and outlet portion 13. More preferably, connecting portion 14 is substantially coaxial with cylindrical member 7. Even more preferably, axes A and B are substantially perpendicular to axis C.

Main body 2 also comprises a substantially cup-shaped cap 15 positioned with its opening facing cavity 8 in cup-shaped portion 5. More specifically, cap 15 is secured, preferably in a removable manner, to cup-shaped portion 5, and bounds cavity 8 on the opposite side to tubular portion 6.

In the example shown, cup-shaped portion 5 comprises at least two peripheral projections 16 adapted to click inside respective grooves 17 in the cylindrical surface of cap 15. Peripheral projections 16 are preferably symmetrical with respect to the circumference of cup-shaped portion 5.

Check valve 1 also comprises a plug member 18 housed in cavity 8 and movable therein between a closed position, in which it prevents fluid flow between inlet portion 12 and outlet portion 13, and more specifically, at a seat 19 formed at least partly in connecting portion 14, and an open position, in which such flow is enabled.

Check valve 1 also comprises elastic means 20 - defined, in the example shown, by a coil spring - housed inside cavity 8, and which cooperate with main body 2 and plug member 18 to push plug member 18 inside seat 19. In other words, in the absence of any other loads, elastic means 20 hold plug member 18 in the closed position.

More specifically, plug member 18 comprises a disc-like portion 21 and a substantially cylindrical stem 22 integral with disc-like portion 21. Moreover, plug member 18 also comprise a head 23 fixed to stem 22, on the opposite side to disc-like portion 21, and which is adapted to engage seat 19 in the closed position.

More specifically, head 23 is bounded, on the opposite side to stem 22, by a substantially hemispherical surface 24.

At connecting portion 14, seat 19 is defined by a surface 25 having a substantially hemispherical curvature corresponding to the curvature of surface 24 defining head 23.

Surface 24 of head 23 thus faces at least partly inside tubular conduit 9, so the pressurized fluid flowing, in use, along tubular conduit 9 cooperates with surface 24 of head 23 to exert on plug member 18 a force component F1 directed along axis C and proportional to the fluid pressure multiplied by the area of surface 24 cooperating with the fluid.

More specifically, disc-like portion 21 comprises a first and second surface 26, 27 opposite each other and facing inwards of first and second portion 10, 11 of cavity 8 respectively.

Elastic means 20 thus extend between second surface 27 of disc-like portion 21 and cap 15.

Moreover, disc-like portion 21 cooperates with a first annular seal 28 for sealing the inner surface of cup-shaped portion 5 of main body 2. In addition, stem 22 cooperates, on the opposite side of disc-like portion 21, with a second annular seal 29 for sealing the inner surface of cylindrical member 7.

A first and second hemi-chamber 30, 31, separated fluidically from each other, are thus defined inside cavity 8. In particular, elastic means 20 are housed in second hemi-chamber 31.

Check valve 1 advantageously also comprises an off-take conduit 32 communicating with tubular conduit 9 and first hemi-chamber 30. More specifically, off-take conduit 32 is formed in cylindrical member 7 and located upstream from seat 19 in a direction of feeding of the operating fluid inlet 3 to outlet 4.

Off-take conduit 32 is preferably crosswise to axis A. More preferably, off-take conduit 32 is substantially perpendicular to axis A and parallel to axis C of cup-shaped portion 5.

At least part of first surface 26 of disc-like portion 21 of plug member 18 thus faces inwards of first hemi-chamber 30, in which operating fluid flows in use. So the pressurized operating fluid flowing along tubular conduit 9 from inlet 3 also cooperates advantageously with first surface 26 of disc-like portion 21, and so also exerts on plug member 18 a force component F2 directed along axis C and proportional to the fluid pressure multiplied by the area of first surface 26 cooperating with the fluid.

Advantageously, the area of first surface 26 exposed to the operating fluid is greater than the fluid-exposed area of surface 24 of head 23.

In use, the operating fluid flows from inlet 3 along tubular conduit 9 and off-take conduit 32 into hemi-chamber 30. In this way, operating fluid exerts on plug member 18 a force F3 directed along axis C and substantially equal to the sum of force components F1 and F2 produced by the operating fluid interacting with surface 24 of head 23 and first surface 26 of disc-like portion 21 respectively.

When force F3 overcomes the opposition of elastic means 20 - i.e. when the pressure Pₛₑₜ of the operating fluid upstream from seat 19 exceeds a given threshold value related to the characteristics of elastic means 20 - plug member 18 is moved along its axis, so detaching head 23 from seat 19, and, as a consequence, allowing operating fluid to flow to outlet 4 and the user device downstream.

The advantages of the check valve according to the present invention will be clear from the above description.

In particular, as explained below, the possibility of operating fluid backflow upstream from seat 19 is virtually excluded, by elastic means 20 conveniently being designed to permit fluid flow through seat 19 when the operating fluid reaches a given pressure Pₛₑₜ upstream from seat 19. In other words, the elastic means are conveniently designed to exert on plug member 18 a resisting load substantially equal to pressure Pₛₑₜ multiplied by the sum of the operating fluid-exposed areas of first surface 26 of disc-like portion 21 and surface 24 of head 23.

For the operating fluid to flow back upstream, its pressure downstream would have to be much higher than pressure Pₛₑₜ, seeing as the same resisting load exerted by elastic means 20 would have to be exceeded by the downstream pressure multiplied only by the area of head 23 of plug member 18 exposed to the downstream operating fluid. Check valve 1 according to the invention, in fact, is designed to prevent any access by the downstream operating fluid to first hemi-chamber 30, and so prevent the downstream fluid pressure being exerted on first surface 26.

Moreover, in check valve 1, the surface area exposed to operating fluid pressure is larger and symmetrical with respect to axis C of plug member 18, so mechanical stress on plug member 18 is more evenly distributed, wear on the plug member is reduced, and prompt opening, when upstream pressure Pₛₑₜ is exceeded, is guaranteed for a large number of operating cycles.

Clearly, changes may be made to the check valve as described and illustrated herein without, however, departing from the protective scope of the accompanying Claims.

## Claims

1. A check valve (1) comprising:
- a main body (2) defining, on the inside, a cavity (8) and a tubular conduit (9) along which a pressurized fluid may flow, and which communicates with said cavity (8); and
- a plug member (18) subjected to an elastic load, housed inside said cavity (8) and movable therein between a closed position, in which the flow of the fluid along said conduit (9) at a seat (19) is interrupted, and an open position, in which said flow is enabled; said plug member (18) comprising a first surface (24) and a second surface (26) differing from said first surface (24);
said pressurized fluid cooperating, in use, with said first surface (24) and, upstream from the seat (19) relative to a direction of feeding of the fluid, with said second surface (26) so as to oppose at least partly to said elastic load;
**characterized in that** said main body (2) defines, on the inside, an off-take conduit (32) communicating with said tubular conduit (9) and with said cavity (8), and **in that** said second surface (26) faces the inside of said cavity (8) towards said off-take conduit (32).

2. The valve according to Claim 1, wherein said second surface (26) has an area greater than the area of said first surface (24).

3. The valve according to Claim 1 or 2, wherein said plug member (18) comprises a disc-like portion (21) delimited, on the side of said off-take conduit (32), by said second surface (26).

4. The valve according to Claim 3, wherein said disc-like portion (21) cooperates with a first annular seal (28) thereby dividing said cavity (8) into a first (30) and a second hemi-chamber (31) fluidically separated from one another.

5. The valve according to Claim 4, wherein said first hemi-chamber (30) communicates with said off-take conduit (32) and wherein said plug member (18) is elastically loaded by elastic means (20) housed in said second hemi-chamber (31).

6. The valve according to any one of Claims 3 to 5, wherein said plug member (18) is provided with a stem (22) comprised between said disc-like portion (21) and said first surface (24).

7. The valve according to Claim 6, wherein said stem (22) cooperates with a second annular seal (29).

8. The valve according to any one of the foregoing Claims, wherein said main body (2) comprises a cup-shaped portion (5) and a lid (15) reciprocally fixed and which at least partly define between each another said cavity (8), said plug member (18) being elastically loaded by elastic means (20) arranged between said lid (15) and the plug member (18) itself.

## Patentansprüche

1. Rückschlagventil (1), aufweisend:
- ein Hauptgehäuse (2), das auf der Innenseite einen Hohlraum (8) sowie eine rohrförmige Leitung (9) begrenzt, entlang welcher ein Druckfluid fließen kann und welche mit dem Hohlraum (8) kommuniziert; und
- ein einer elastischen Last ausgesetztes Steckelement (18), das in dem Hohlraum (8) aufgenommen und in diesem zwischen einer geschlossenen Position, in welcher der Strom des Fluids entlang der Leitung (9) an einem Sitz (19) unterbrochen ist, und einer geöffneten Position, in welcher der Strom zugelassen ist, beweglich ist; wobei das Steckelement (18) eine erste Oberfläche (24) und eine zweite Oberfläche (26), die sich von der ersten Oberfläche (24) unterscheidet, aufweist;
wobei das Druckfluid bei Verwendung mit der ersten Oberfläche (24) und, stromaufwärts des Sitzes (19) in Bezug auf eine Richtung der Fluidzufuhr, mit der zweiten Oberfläche (26) zusammenwirkt, um zumindest teilweise der elastischen Last entgegenzuwirken;
**dadurch gekennzeichnet, dass** das Hauptgehäuse (2) auf der Innenseite eine Abzugsleitung (32) begrenzt, die mit der rohrförmigen Leitung (9) und mit dem Hohlraum (8) kommuniziert, und dass die zweite Oberfläche (26) zur Innenseite des Hohlraums (8) in Richtung zur Abzugsleitung (32) weist.

2. Ventil nach Anspruch 1, wobei die zweite Oberfläche (26) eine Fläche aufweist, die größer ist als die Fläche der ersten Oberfläche (24).

3. Ventil nach Anspruch 1 oder 2, wobei das Steckelement (18) einen scheibenartigen Abschnitt (21) aufweist, der auf der Seite der Abzugsleitung (32) durch die zweite Oberfläche (26) begrenzt ist.

4. Ventil nach Anspruch 3, wobei der scheibenartige Abschnitt (21) mit einer ersten ringförmigen Dichtung (28) zusammenwirkt und dadurch den Hohlraum (8) in eine erste (30) und eine zweite Halbkammer (31) unterteilt, die fluidtechnisch voneinander getrennt sind.

5. Ventil nach Anspruch 4, wobei die erste Halbkammer (30) mit der Abzugsleitung (32) kommuniziert und wobei das Steckelement (18) durch elastische Mittel (20), die in der zweiten Halbkammer (31) aufgenommen sind, elastisch belastet ist.

6. Ventil nach einem der Ansprüche 3 bis 5, wobei das Steckelement (18) mit einem Schaft (22) versehen ist, der sich zwischen dem scheibenartigen Abschnitt (21) und der ersten Oberfläche (24) befindet.

7. Ventil nach Anspruch 6, wobei der Schaft (22) mit einer zweiten ringförmigen Dichtung (29) zusammenwirkt.

8. Ventil nach einem der vorstehenden Ansprüche, wobei das Hauptgehäuse (2) einen schalenförmigen Abschnitt (5) und einen Deckel (15) aufweist, die aneinander befestigt sind und zumindest teilweise zwischen einander einen weiteren Hohlraum (8) begrenzen, wobei das Steckelement (18) durch elastische Mittel (20), die zwischen dem Deckel (15) und dem Steckelement (18) selber angeordnet sind, elastisch belastet ist.

## Revendications

1. Clapet anti-retour (1) comprenant :
- un corps principal (2) définissant, du côté intérieur, une cavité (8) et un conduit tubulaire (9) le long duquel peut s'écouler un fluide sous pression, et qui communique avec ladite cavité (8) ; et
- un élément d'obturation (18) soumis à une sollicitation élastique, logé à l'intérieur de ladite cavité (8) et mobile à l'intérieur entre une position fermée, dans laquelle l'écoulement du fluide le long dudit conduit (9) au niveau d'un siège (19) est interrompu, et une position ouverte, dans laquelle ledit écoulement est autorisé ; ledit élément d'obturation (18) présentant une première surface (24) et une seconde surface (26) différente de ladite première surface (24) ;
ledit fluide sous pression coopérant, en utilisation, avec ladite première surface (24) et, en amont du siège (19) par référence à une direction d'alimentation avec le fluide, avec ladite seconde surface (26) de manière à s'opposer au moins partiellement à ladite sollicitation élastique ;
**caractérisée en ce que** ledit corps principal (2) définit, du côté intérieur, un conduit de décharge (32) communiquant avec ledit conduit tubulaire (9) et avec ladite cavité (8), et **en ce que** ladite seconde surface (26) est orientée vers l'intérieur de ladite cavité (8) en direction dudit conduit de décharge (32).

2. Clapet selon la revendication 1, dans laquelle ladite seconde surface (26) a une aire supérieure à l'aire de ladite première surface (24).

3. Clapet selon la revendication 1 ou 2, dans laquelle ledit élément d'obturation (18) comprend une partie discoïdale (21) délimitée, du côté dudit conduit de décharge (32), par ladite seconde surface (26).

4. Clapet selon la revendication 3, dans laquelle ladite partie discoïdale (21) coopère avec un premier joint annulaire (26) divisant ainsi ladite cavité (8) en une première demi-chambre (30) et une seconde demi-chambre (31) séparées l'une de l'autre du point de vue fluidique.

5. Clapet selon la revendication 4, dans laquelle la première demi-chambre (30) communique avec ledit conduit de décharge (32) et dans laquelle ledit élément d'obturation (18) est sollicité élastiquement par des moyens élastiques (20) logés dans ladite seconde demi-chambre (31).

6. Clapet selon l'une quelconque des revendications 3 à 5, dans laquelle ledit élément d'obturation (18) est doté d'une tige (22) comprise entre ladite partie discoïdale (21) et ladite première surface (24).

7. Clapet selon la revendication 6, dans laquelle ladite tige (22) coopère avec un second joint annulaire (29).

8. Clapet selon l'une quelconque des revendications précédentes, dans laquelle le corps principal (2) comprend une partie en cuvette (5) et un couvercle (15) fixés l'un à l'autre et qui définissent au moins partiellement entre eux ladite cavité (8), ledit élément d'obturation (18) étant sollicité élastiquement par des moyens élastiques (20) disposés entre ledit couvercle (15) et ledit élément d'obturation (18) lui-même.
